(19) Europäisches Patentamt
European Patent Office
Office européen des brevets

(11) **EP 3 222 152 A1**

(12) **EUROPEAN PATENT APPLICATION**
published in accordance with Art. 153(4) EPC

(43) Date of publication:
**27.09.2017 Bulletin 2017/39**

(51) Int Cl.:
*A23K 50/00* [(2016.01)]   *A23K 10/00* [(2016.01)]
*B65D 81/34* [(2006.01)]

(21) Application number: **14906230.9**

(22) Date of filing: **16.12.2014**

(86) International application number:
**PCT/JP2014/083213**

(87) International publication number:
**WO 2016/079884 (26.05.2016 Gazette 2016/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.11.2014 JP 2014233962**

(71) Applicant: **Unicharm Corporation
Ehime 799-0111 (JP)**

(72) Inventors:
• **MIYAMOTO Katsunori**
  **Itami-shi**
  **Hyogo 664-0831 (JP)**
• **INOUE Kazunori**
  **Itami-shi**
  **Hyogo 664-0831 (JP)**
• **YOSHIDA Kotaro**
  **Itami-shi**
  **Hyogo 664-0831 (JP)**

(74) Representative: **Dolleymores
9 Rickmansworth Road
Watford, Hertfordshire WD18 0JU (GB)**

(54) **PET FOOD FEEDING METHOD, GRANULAR PET FOOD, AND PET FOOD PACKAGING**

(57)    Provided is a feeding method including: heating granular pet food 2 to a temperature range of 30°C to 70°C and feeding the granular pet food to a pet.

FIG. 1

**Description**

Technical Field

The present inveniton relates to a pet food feeding method, granular pet food, and a pet food packaging.
Priority is claimed on Japanese Patent Application No. 2014-233962, filed on November 18, 2014, the content of which is incorporated herein by reference.

Background Art

As pet food mainly targeting dogs or cats, pet food containing liquid-like or jelly-like soup (also referred to as wet type pet food) is also on the market in addition to granular pet food. Further, even in granular pet food, there are two types of pet food, which are dry type pet food having a low water content and semi-moist type pet food having a relatively large water content.
In pet food, various ideas have been devised from the past in order for pets to have a good appetite for eating pet food, that is, in order to improve palatability of pet food.
For example, PTL 1 describes a method of reducing leftovers by warming a wet type cat food accommodated in a retort pouch in an amount to be used in one occasion to a temperature at which palatability of the food for a cat increases (specifically 37°C), and providing the food.

Citation List

Patent Literature

[PTL 1] Japanese Unexamined Patent Application, First Publication No. 2003-144059

Summary of Invention

Technical Problem

However, a specific method of improving palatability of granular pet food is not described in PTL 1.
An object of the present invention is to provide a feeding method, granular pet food, and a pet food packaging capable of improving the palatability of granular pet food. Solution to Problem
Granular pet food of the related art can be stored at room temperature and be fed by being taken out onto a dish and this easiness is one of the attractions. However, granular pet food of the related art has not been considered to be fed after being heated.
However, the present inventors found that palatability of granular pet food can be improved by being heated, thereby completing the present invention.
The present invention is as follows.
(1) A feeding method including: heating granular pet food to a temperature range of 30°C to 70°C; and feeding the granular pet food to a pet.
(2) The feeding method according to (1), in which an amount of the granular pet food to be used in one occasion is sealed in a packaging material having a heat resistance and gas barrier properties and the packaging material is heated without being opened.
(3) The feeding method according to (2), in which the packaging material has microwave oven suitability and is heated using a microwave oven.
(4) Granular pet food which is heated to a temperature range of 30°C to 70°C just before feeding.
(5) The granular pet food according to (4) containing, inside of granules: modified starch which is obtained by esterifying starch with propylene oxide; and fats and oils.
(6) The granular pet food according to (4) or (5), in which a water content is in a range of 15% to 30% by mass, and an amount of change (unit: %) in breaking stress due to heating, which is calculated using the following Formula (i), is 40% or greater.

$$\text{Amount of change [\%] in breaking stress due to heating} = (P1 - P2)/P1 \times 100 \cdots$$

Formula (i):

P1: breaking stress [N] at room temperature (surface temperature of 25°C)
P2: breaking stress [N] measured immediately after the granular pet food is heated such that the surface temperature is set to 45°C.

(7) The granular pet food according to any one of (4) to (6), in which the granular pet food includes a coating layer containing a flavoring agent.
(8) A pet food packaging, in which the granular pet food according to any one of (4) to (7) is accommodated in a packaging material, and the packaging material has an indication associated with heating just before feeding.
(9) The pet food packaging according to (8), in which the packaging material has heat resistance and gas barrier properties, an amount of the granular pet food to be used in one occasion is sealed in the packaging material, and the packaging material is configured to be capable of being heated without being opened.
(10) The pet food packaging according to (9), in which the packaging material has microwave oven suitability.
(11) The pet food packaging according to (10), in which the packaging material is provided with a rupture preventing mechanism.
(12) The pet food packaging according to (10) or (11), in which an oxygen absorber having a microwave oven suitability is sealed in the packaging material.
(13) The pet food packaging according to any one of (9) to (12), in which gas in the packaging material is replaced with nitrogen gas.

Advantageous Effects of Invention

According to the feeding method of the present invention, it is possible to improve palatability of granular pet food.
The granular pet food of the present invention can be used for a method of feeding pet food after being heated, and the palatability of the pet food can be improved by being heated.
The pet food packaging of the present invention can be used for a method of feeding pet food after being heated, and the palatability of the pet food can be improved by being heated.

Brief Description of Drawings

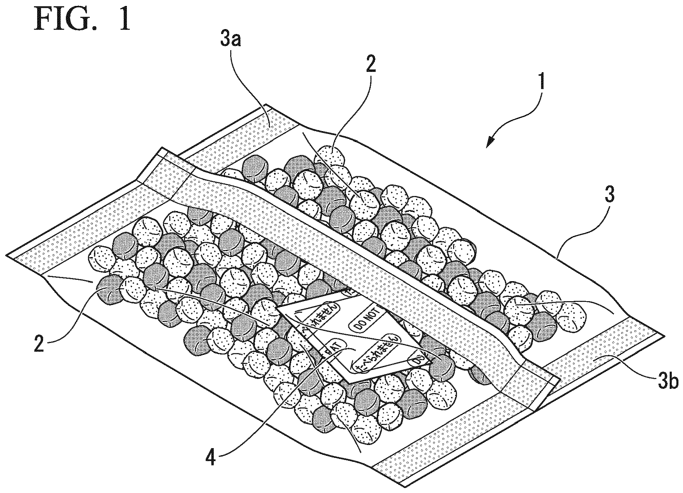

FIG. 1 is a perspective view illustrating an embodiment of a pet food packaging of the present invention.

Description of Embodiments

In the present specification, the term "pets" indicates animals that have been bred by people. In a narrower sense, pets are animals being cared for by their owners. Further, the term "pet food" indicates feed for pets. The pet food of the present invention can be sold as "animal feed" or "animal food".
In the present specification, the term "coating" means that an external additive is applied to a surface of a granule so that the external additive adheres to the surface of the granule. The concept of "coating" also includes a case where a part or the entirety of the applied liquid infiltrates the granule.
In the present specification, the water content is a value obtained by the following measurement method.
An object to be measured is ground using a grinder so as to pass through a sieve having an opening diameter of 1 mm and then used as an analytical sample. 2 g to 5 g of the analytical sample is accurately weighed, put into an aluminum weighing dish (after the sample has been dried in advance, the weight thereof is accurately weighed), dried at a temperature of $135 \pm 2$°C for 2 hours, and left to be cooled in a desiccator. Next, the weight thereof is accurately weighed, and then the water content is acquired from a difference between the weights weighed before and after the drying.
In the present specification, the water content of granular pet food is a value obtained by a measurement immediately after a pet food packaging produced by accommodating pet food in a packaging material and sealing the packaging material immediately after production has been opened within 30 days from the date of manufacture or is a value obtained by a measurement under the conditions similar to the conditions described above.
In a case where a mixture of two or more types of granules with different water contents are accommodated in one packaging material, the value obtained by measuring the mixture as a material to be measured is set as a water content of the granular pet food.

In the present specification, the value of water activity (Aw) of granular pet food is a value obtained by performing a measurement on a sample prepared by grinding the granular pet food at a measurement temperature of 25°C using a known water activity measuring device.

For example, the measurement can be carried out using a water activity measuring device "Novasina IC-500 AW-LAB (product name, manufactured by DKSH Japan K.K.)".

In the present specification, the water activity (Aw) of the granular pet food (including a mixture of two or more types of granules) is a value obtained by a measurement performed on the granular pet food immediately after a pet food packaging produced by accommodating the pet food in a packaging material and sealing the packaging material immediately after production has been opened within 30 days from the date of manufacture or is a value obtained by a measurement performed on the granular pet food under the conditions similar to the conditions described above.

In the present specification, the bulk density of the granular pet food is a value obtained by the following measurement method.

The granular pet food falling from a hopper (funnel-shaped container) is received by a container and the granular pet food piled from the container are scrapped off using a metal plate or the like such that the container is fully filled with the granular pet food. A value obtained by dividing a total mass M (unit: g) of the granular pet food in the container by an inner volume V (unit: L) of the container, that is, a value of M/V is set as a bulk density (unit: g/L).

In the present specification, the bulk density is a value obtained by a measurement performed on the granular pet food immediately after a pet food packaging produced by accommodating pet food in a packaging material and sealing the packaging material immediately after production has been opened within 30 days from the date of production or is a value obtained by a measurement performed on the granular pet food under the conditions similar to the conditions described above.

In a case where a mixture of two or more types of granules with different bulk densities are accommodated in one packaging material, the value obtained by measuring the mixture as a material to be measured is set as a bulk density of the granular pet food.

<Pet food packaging>

A pet food packaging of the present embodiment is a packaging material in which granular pet food is accommodated.

The packaging may be a packaging directly accommodating granular pet food in a packaging material (also referred to as an inner packaging material) or a packaging accommodating a plurality of packagings, each of which has granular pet food accommodated in an inner packaging material, in a packaging material (also referred to as an outer packaging material).

FIG. 1 is a perspective view illustrating an embodiment of a pet food packaging 1 of the present invention. The pet food packaging 1 of the present embodiment includes granular pet food 2 in an amount to be used in one occasion, directly sealed by a packaging material (inner packaging material) 3. Although not illustrated in the figure, the surface of the packaging material 3 has an indication associated with heating just before feeding. The reference numeral 4 represents an oxygen absorber.

The granular pet food 2 accommodated in the packaging material 3 according to the present embodiment is a mixture of granules with different color tones, which is produced by changing the type of colorant. The compositions of the components other than the colorant are the same as each other. The granular pet food 2 will be described later.

An amount to be used in one occasion means an amount of pet food to be used up in one feeding, that is, an amount of one feeding or an amount of pet food obtained by subdividing a part of the amount of one feeding. The amount of one feeding varies depending on the type of pet food (comprehensive nutritional diet, snacks, or the like) or the weight of a pet, but is preferably in a range of 10 to 250 g and more preferably in a range of 20 to 50 g.

In a case of the comprehensive nutritional diet of a small dog, for example, the predetermined value of amount of one feeding is set to 25 g and the total amount of pet food may be accommodated in the packaging material 3 as the amount to be used in one occasion. Alternatively, a half amount of the predetermined value is set as the amount to be used in one occasion and the half amount of pet food may be accommodated in the packaging material 3. For example, when the total amount of the predetermined value is subdivided into a half amount, it is convenient to feed a pet with pet food in a half amount of the predetermined value or with an amount 1.5 times the predetermined value for one feeding.

The material of the packaging material 3 is not particularly limited as long as the packaging material has heat resistance and gas barrier properties. Known materials can be appropriately used. The gas barrier properties of the packaging material 3 means that the packaging material has at least water vapor barrier properties. Further, it is preferable that the packaging material has oxygen barrier properties. The heat resistance temperature is preferably 100°C or higher and more preferably 120°C or higher. For example, a known material having a heat resistance and gas barrier properties can be appropriately used as a food packaging material.

When the packaging material 3 has heat resistance and gas barrier properties and the granular pet food 2 sealed in the packaging material is in an amount to be used in one occasion, for example, the granular pet food 2 can be heated in a hot water bath without opening the packaging material 3.

It is preferable that the packaging material 3 further has microwave oven suitability. The packaging material having a microwave oven suitability means that the packaging material is formed of a material which can be heated using a microwave oven. Materials which are known as food packaging materials and adaptable to a microwave oven can be appropriately used.

When the packaging material 3 has microwave oven suitability and the granular pet food 2 sealed by the packaging material is in an amount to be used in one occasion, for example, the granular pet food 2 can be heated using a microwave oven without opening the packaging material 3.

In a case where the packaging material 3 has microwave oven suitability, it is preferable that a rupture preventing mechanism is provided. As the rupture preventing mechanism, it is preferable to provide, for example, a vapor discharge portion that removes vapor inside the packaging material 3 when excessively heated. The vapor discharge portion may have any suitable known structure.

For example, the packaging material 3 of FIG. 1 is formed into a bag by heat-sealing three sides of a packaging film having a heat resistance, gas barrier properties, microwave oven suitability, and heat sealing properties.

The reference numerals 3a and 3b in the figure represent heat sealing portions on both ends in the length direction.

When the pet food packaging 1 is heated by a microwave oven without being opened, one heat sealing portion 3a is opened just before the bag ruptures so that high-temperature and high-pressure steam blows off from the packaging if the pet food packaging is excessively heated and the pressure inside the bag is increased.

In the present embodiment, the granular pet food 2 and an oxygen absorber 4 are sealed in the pet food packaging 1. With this configuration, deterioration of the granular pet food 2 with lapse of time can be suppressed. Specifically, generation of deterioration odor such as oxidation odor of fats and oils can be suppressed by suppressing oxidation of granular pet food 2.

Since the odor of the granular pet food 2 becomes stronger by being heated just before feeding, the palatability is easily degraded when deterioration odor is generated. When the oxygen absorber 4 is used, since deterioration odor can be suppressed by suppressing deterioration of the granular pet food 2, this contributes to improvement of the palatability resulting from heating the granular pet food 2 just before feeding.

In a case where the packaging material 3 has microwave oven suitability, an oxygen absorber having a microwave oven suitability is used as the oxygen absorber 4. The expression "having a microwave oven suitability" means "being configured of a material which can be heated by a microwave oven". An oxygen absorber having a microwave oven suitability is commercially available.

In a case where the packaging material 3 has gas barrier properties, it is preferable that gas inside the packaging material 3 is replaced with nitrogen gas. In this manner, since deterioration odor can be suppressed by suppressing deterioration such as oxidation of the granular pet food 2, this contributes to improvement of the palatability resulting from heating the granular pet food 2 just before feeding.

The oxygen absorber 4 may be sealed in the pet food packaging 1 when the gas inside the packaging material 3 is replaced with nitrogen gas.

An indication provided on the surface of the packaging material 3 is not particularly limited as long as the content is associated with heating just before feeding. For example, the indication may be an instruction to notify that the pet food can be heated just before feeding, for example, "you can warm this pet food to feed your pet." or an instruction to suggest that the pet food be heated just before feeding, for example, "this pet food becomes more delicious when warmed" or "please feed your pet after warming this pet food". Alternatively, the indication may be associated with a heating method or a heating condition in which the temperature of the granular pet food 2 is set to be a predetermined target temperature (in a range of 30°C to 70°C). Specifically, the indication may be associated with the time for immersing the pet food in boiling water according to a heating method using a water bath. Alternatively, the indication may be associated with a rated high frequency output (wattage) according to a heating method using a microwave oven.

The indication for heating just before feeding may be a combination of two or more types of the indications described above.

In addition, the shape of the packaging material 3 is not limited to a bag. For example, the shape thereof may be a shape formed by heat-sealing an opening portion of a bowl-like container with a packaging film.

Further, the amount of the granular pet food 2 accommodated in the packaging material 3 may not be an amount to be used in one occasion. In this case, an appropriate amount of pet food may be taken out from the packaging material 3 and then heated.

Further, the packaging material 3 may not have heat resistance or gas barrier properties. In this case, the pet food may be taken out from the packaging material 3 and then heated.

Further, a plurality of pet food packagings 1, each of which is formed by accommodating the granular pet food 2 in a packaging material (inner packaging material) 3 may be accommodated in a packaging material (outer packaging material) other than the packaging material 3. The outer packaging material is, for example, a bag or a box larger than the packaging material 3. In this case, the indication for heating just before feeding may be provided on the individual packaging materials 3 and at least one side of the outer packaging material or both sides of the outer packaging material. It is preferable that the indication is provided on at least the outer packaging material.

<Feeding method>

A feeding method according to the present embodiment is a method of heating the granular pet food to a temperature range of 30°C to 70°C and feeding a pet. The expression "heating the granular pet food to a temperature range of 30°C to 70°C and feeding a pet" means that the surface temperature of the granular pet food is heated to be in a range of 30°C to 70°C just before feeding.

The palatability of the pet food is improved by setting the surface temperature of the granular pet food (hereinafter, also referred to as a heating temperature) when the heating is finished to be in a range of 30°C to 70°C. It is preferable that the heating temperature is in a range of 40°C to 50°C.

The heating method is not particularly limited. A method of heating granular pet food by taking out an appropriate amount of granular pet food from a packaging material or a method of heating granular pet food without opening a packaging material in a case where an amount of granular pet food to be used in one occasion is sealed in the packaging material which can be heated may be used. From the viewpoint of preventing generation of an odor during the heating, a method of heating granular pet food without opening a packaging material is preferable.

The heating means is not particularly limited, and a method of heating granular pet food using a microwave oven or a method of bringing granular pet food into direct or indirect contact with a heating medium such as a liquid (boiling water or the like) at a high temperature or gas (hot air or the like) can be used.

Particularly, a method of heating granular pet food using a microwave oven without opening a packaging material is convenient and also preferable because the odor of the granular pet food does not leak into the microwave oven.

<Granular pet food>

The granular pet food according to the present embodiment is granular pet food heated to a temperature range of 30°C to 70°C just before feeding. It is preferable that the granular pet food is heated to a temperature range of 40°C to 50°C just before feeding.

The water content of the granular pet food is not particularly limited and the granular pet food may be dry type granular pet food or semi-moist type granular pet food.

The water content of dry type granular pet food is preferably 12% by mass or less and more preferably 10% by mass or less. The lower limit of the water content thereof is not particularly limited. The lower limit thereof is typically 5% by mass or greater and more preferably 7% by mass or greater.

The dry type granular pet food may be formed of puffed granules or non-puffed granules.

The "puffed granules" are granules obtained by forming a raw ingredient mixture in a granular shape and also obtained by performing a puffing process of foaming inside of the raw ingredient mixture. The "puffing process" indicates a process of generating gas inside of the raw ingredient mixture using a technique of carrying out heating, fermentation, a chemical reaction, or pressure reduction. The "non-puffed granules" are granules produced without performing the puffing process.

The bulk density of the dry type granular pet food depends on the water content thereof and the bulk density of the puffed granules is preferably in a range of 300 to 460 g/L, more preferably in a range of 350 to 450 g/L, and still more preferably in a range of 380 to 440 g/L. The bulk density of the non-puffed granules is preferably in a range of 445 to 500 g/L and more preferably in a range of 450 to 485 g/L.

The water content of semi-moist type granular pet food is preferably in a range of 15% to 30% by mass and more preferably in a range of 20% to 30% by mass. Further, the water activity (Aw) of the semi-moist type granular pet food is preferably in a range of 0.60 to 0.87 and more preferably in a range of 0.70 to 0.80.

The semi-moist type granular pet food may be puffed granules or non-puffed granules.

<Raw ingredients>

The raw ingredients of the granular pet food is not particularly limited, and any suitable known raw ingredients can be used.

Briefly, the granular pet food is produced by mixing powder raw ingredients and liquid raw ingredients to obtain a raw ingredient mixture and granulating the mixture. The mixture may be coated with an external additive after granulation. The raw ingredient mixture forms granules and the external additive forms a coating layer.

Particularly, in a case where at least one of the inside of a granule and the coating layer of the granular pet food contains fats and oils, when the granule is heated to 30°C or higher, fats and oils are melted so that a pet can feel the taste of the fats and oils easily. Therefore, the palatability is further improved.

Further, the odor of the pet food becomes excellent due to volatilization of fatty acid derived from fats and oils and this contributes to improvement of palatability.

<Powder raw ingredients>

As powder raw ingredients, known raw ingredients used in a powder state during the process of granulating pet food can be appropriately used. Plural types of raw ingredients can be mixed and used as the powder raw ingredients.

Examples of the raw ingredients include cereals (such as corn, wheat, rice, barley, oats, and rye), beans (such as whole soybeans), starch (such as wheat starch, corn starch, rice starch, potato starch, tapioca starch, sweet potato starch, and sago starch), protein (vegetable protein such as corn gluten meal, defatted soybean meal, and soybean protein; and animal protein such as chicken, beef, pork, venison, meals (such as chicken meal, pork meal, beef meal, and mixed meal of these), and seafood (such as fish and fish meal)), vegetables, and powdery additives (such as vitamins, inorganic salts, an amino acid, saccharides, organic acid, flavoring raw ingredients, fibers, colorants, preservatives, emulsifiers, and palatability enhancers).

The meals indicate powder products obtained by compressing and finely grinding meat or seafood.

Examples of the palatability enhancers include animal raw ingredient extract powder of meat and seafood; and vegetable raw ingredient extract powder.

It is preferable that the composition of the raw ingredient mixture is formulated according to the nutrient composition of granular pet food expected to be obtained.

[Liquid raw ingredients]

As liquid raw ingredients to be added to the powder raw ingredients, known liquid raw ingredients in the production of pet food, such as water, fats and oils, liquid sugar, a humectant, and an emulsifier, can be used as necessary. The liquid raw ingredients may be used alone or in combination of two or more kinds thereof. A humectant or an emulsifier is frequently added in a state of an aqueous solution.

It is preferable that fats and oils are used in dry type or semi-moist type granular pet food. In the semi-moist type granular pet food, it is preferable to use liquid sugar, a humectant, and an emulsifier.

[Fats and oils]

The fats and oils may be vegetable fats and oils or animal fats and oils. From the viewpoint of reliably obtaining high palatability, it is preferable to use animal fats and oils. Examples of the animal fats and oils include chicken oil, lard, beef tallow (fat), and milk fats and oils.

[Modified starch]

Particularly, it is preferable that modified starch (hereinafter, referred to as modified starch H) obtained by etherifying starch with propylene oxide is used as a part of powder raw ingredients and fats and oils are used as liquid raw ingredients. In this manner, granular pet food containing modified starch H and fats and oils inside granules (not including the coating layer) is obtained.

The modified starch H is starch to which a hydroxypropyl group is introduced and added by etherifying starch with propylene oxide. Specifically, hydroxypropyl starch and hydroxypropylated phosphate crosslinked starch is preferable. These are commercially available. For example, LILY 8 (product name, hydroxypropylated phosphate crosslinked starch, manufactured by Matsutani Chemical Industry Co., Ltd.) is preferable.

As shown in the examples described below, the hardness of granule at room temperature is decreased when the granules of the granular pet food contain fats and oils inside the granules and the granules become softer when heated. The softness thereof is increased as the amount of fats and oils is increased.

The hardness of granule at room temperature is decreased when the modified starch H is blended into the granules of the granular pet food and the granules become softer when heated compared to a case where the modified starch H is not blended into the granules.

Particularly, when fats and oils and modified starch H are blended into the raw ingredient mixture, a synergistic effect in which the hardness of granules further decreases and an amount of change (reduction amount) in hardness of granules before and after being heated increases is obtained. Further, an increase in hardness of granules during storage of granular pet food is reduced and thus an effect of excellently maintaining the softness of granules is also obtained.

In order to obtain the above-described synergistic effect, it is preferable that the granules of the granular pet food contain modified starch H inside the granules. In addition, the content of fats and oils is preferably 1.5% by mass or greater, more preferably 3.0% by mass or greater, and still more preferably 5.0% by mass or greater with respect to the content of the raw ingredient mixture. From the viewpoint of the puffed state, the upper limit of the content of fats and oils is preferably 15% by mass or less and more preferably 10% by mass or less.

In addition, the amount of modified starch H to be added is preferably 3.0% by mass or greater and more preferably 5.0% by mass or greater with respect to the amount of the raw ingredient mixture. From the viewpoint of the forming state, the upper limit of the content of the modified starch H is preferably 30% by mass or less and more preferably 15% by mass or less.

In addition, the fats and oils blended into the raw ingredient mixture can be considered to be uniformly contained in granules obtained by granulating the raw ingredient mixture. Therefore, since the vicinity of the surface of a granule may be infiltrated by an external additive in a case where the granular pet food is coated with the external additive containing fats and oils, the content of fats and oils in the central portion of a granule is set as the content of fats and oils inside of a granule.

When the amount of change in hardness of granules before and after heating the granular pet food can be set to be large using the synergistic effect, it is easy for a feeder to be informed that the granular pet food is suitable for a method of heating just before feeding and it is also advantageous in terms of differentiating from other products. Further, the palatability for a pet which prefers particularly soft granular pet food is further improved.

Particularly, it is preferable that semi-moist type granular pet food contains modified starch H and fats and oils inside the granules. In this manner, since semi-moist type granular pet food which is initially soft can be made to be softer significantly by being heated just before feeding compared to dry type granular pet food, granular pet food with unique physical properties can be obtained.

For example, semi-moist type granular pet food in which the water content is 15% to 30% by mass and "the amount in change of breaking stress due to heating" to be acquired by the following measurement method is 40% or greater can be obtained. Further, semi-moist type granular pet food in which "the amount in change of breaking stress due to heating" is preferably 50% or greater and more preferably 60% or greater can be obtained.

In a case where granular pet food is a mixture of two or more types of granules, granular pet food in which "the amount in change of breaking stress due to heating" is 40% or greater means that each amount of change in breaking stress due to heating in all types of granules is 40% or greater.

[External additive]

Known external additives can be used as the additives. For example, fats and oils, flavoring agents, and palatability enhancers (such as animal raw ingredient extracts, vegetable raw ingredient extracts, and yeasts) are used.

In the present invention, since the odor of the granular pet food becomes stronger by being heated just before feeding, it is preferable that the odor is adjusted using a flavoring agent.

As shown in the examples described below, it is considered that a flavoring agent does not contribute to improvement of palatability of granular pet food. Accordingly, it is preferable that a flavoring agent which is suitable for masking the odor unfavorable to a feeder and does not degrade the palatability of pet food is appropriately selected and then used.

The amount of the flavoring agent to be used is not particularly limited, but is preferably in a range of 0.001 to 0.5 parts by mass and more preferably in a range of 0.01 to 0.3 parts by mass with respect to 100 parts by mass of the raw ingredient mixture (100 parts by mass of granulated material) used for granulation from the viewpoint of reliably obtaining an excellent masking effect without degrading the palatability.

[Blending of raw ingredients]

The blending of raw ingredients is not particularly limited. It is preferable that the raw ingredients are set to be blended such that the nutritional composition of the granular pet food to be obtained is satisfied and excellent formability is obtained.

As a blending (not including external additives) example of dry type granular pet food, a case where the total content of cereals, beans, and starch is in a range of 40% to 70% by mass, the total content of protein is in a range of 5% to 30% by mass, and the remainder is other components with respect to the total content of the raw ingredient mixture may be exemplified.

As a blending (not including external additives) example of semi-moist type granular pet food, a case where the total content of cereals, beans, and starch is in a range of 20% to 60% by mass, the total content of protein is in a range of 5% to 25% by mass, and the remainder is other components with respect to the total content of the raw ingredient mixture may be exemplified.

<Method of producing granular pet food>

A method of producing granular pet food is not particularly limited, and granular pet food can be produced using a known method.

For example, dry type granular pet food can be produced using a method of mixing powder raw ingredients, further mixing liquid raw ingredients to obtain a raw ingredient mixture, granulating the raw ingredient mixture, drying the raw ingredient mixture until the water content thereof reaches a predetermined value, and coating the raw ingredient mixture with an external additive as necessary.

For example, semi-moist type granular pet food can be produced using a method of performing the same procedures as those of the method of producing dry type granular pet food until the granulation process is completed and then coating the raw ingredient mixture with an external additive as necessary without performing a drying process.

As a granulation method, a method of extruding and granulating puffed granules using an extrusion granulator that includes a pre-conditioner and an extruder can be used.

As a method of producing puffed granules using an extrusion granulator, for example, a method described in "Small Animal Clinical Nutrition 4th Edition" (edited by Michael S. Hand, Craig D. Thatcher, Rebecca L. Remillard, and Philip Roudebusg, published by Mark Morris Associates; 2000; p 157 to 190) can be used.

It is preferable that the conditions of the heat treatment in a pre-conditioner and an extruder are set such that the raw ingredients are not excessively heated and the effect of improving digestibility resulting from pregelatinization of starch can be obtained.

The size and the shape of granular pet food are not particularly limited as long as the granules are formed in a size and a shape which are suitable for a pet for eating the pet food.

Examples of the shapes of granular pet food include a spherical shape, a polygonal shape, a cylindrical shape, a donut shape, a plate shape, a go stone shape (circular, curved tablet), a heart shape, a star shape, a fish shape, and a wheel shape.

In the size of granular pet food, for example, both the shortest diameter and the longest diameter are preferably in a range of 3 to 30 mm, more preferably in a range of 6 to 16.5 mm, and still more preferably in a range of 8 to 12 mm.

[Examples]

The present invention will be described in detail with reference to the examples described below, but the present invention is not limited thereto.

The following method was used as an evaluation method.

<Method of evaluating palatability>

The palatability was evaluated according to a method of comparing the ingested amounts using a combination of pet food B and pet food A. The test was performed for 2 days by monitoring a predetermined number of dogs.

On the first day, a predetermined feeding amount of pet food A and pet food B were fed to each dog at the same time, one from the left side and the other from the right side, and then each amount of pet food eaten by a dog was measured after the dog had eaten all of pet food A or pet food B, or after one hour from the start of feeding.

The ingested amount of pet food B and the ingested amount of pet food A were acquired in percentages based on the total weight of the pet food eaten by one dog during the first day. The percentages obtained from the number of dogs that had been monitored were averaged and set as the result for the first day.

On the second day, the pet food A and the pet food B were fed to each dog at the same time, one from the left side and the other from the right side, provided that the pet foods were fed from the opposite side from the first day. The same feeding amount as that of the first day was fed to one dog and then the amount of pet food eaten by a dog was measured after the dog had eaten all of pet food A or pet food B or after one hour had elapsed.

The result of the second day was obtained according to the same calculation method as that for the first day.

Finally, the results of the first and second days were averaged, and the ratios of "the numerical value A:the numerical value B" (palatability) of the ingested amount of pet food A to the ingested amount of pet food B as the final results were acquired. It indicates that a dog being monitored had a good appetite for eating the pet food as the acquired numeric value of the palatability is high.

<Compression tester (measurement of breaking stress)>

The breaking stress when the granular pet food was compressed at a constant compression rate was measured under the following conditions using a compression tester (TEXTURE ANALYZER, model No: EZ-SX, manufactured by Shimadzu Corporation).

Plunger: cylindrical plunger having diameter of 3 mm
Platform: flat dish
Compression rate: 60 mm/min
Lowest point of plunger: 4 mm (compression distance)
Measurement temperature: 25°C

That is, one granule from the granular pet food to be measured was placed on the flat dish and the stress was measured while a plunger vertically pressed from the top of the granule at a constant rate. The peak value (maximum value) of the stress was read and recognized as the value of the breaking stress. The measurement was repeated with respect to 10 granules and the average value thereof was acquired.

The unit of the breaking hardness was converted into Newtons (N) by multiplying the numerical value of the breaking stress (unit: kgw) measured using the above-described compression tester by 9.8.

(Production Example 1: dry type pet food D1)

From the composition listed in Table 1, the remaining ingredients excluding external additives were mixed, water (not included in raw ingredient composition) was added thereto, and the solution was further mixed. The obtained raw ingredient mixture was put into an extruder and subjected to a heat treatment at 115°C ± 15°C for approximately 2 minutes while kneading, a starch component was pregelatinized, and the mixture was puffed simultaneously with being extruded and granulated in a granular shape in an outlet of the extruder. The kneaded material was extruded from a (circular) hole having a diameter of 4.5 mm in a columnar shape in the outlet of the extruder, the columnar material was cut using a cutter such that the thickness thereof was set to 5.5 mm, thereby obtaining a granulated material.

After the obtained granulated material was subjected to a drying treatment at approximately 100°C for 30 to 40 minutes using a drier, the granulated material was coated with an external additive, and granular pet food D1 formed of dry type puffed granules was obtained.

The bulk density and the water content of the obtained granular pet food D1 were measured using the methods described above. The bulk density thereof was 41.0 g/L and the water content thereof was 9.0% by mass.

In the present example, the content of fats and oils in the raw ingredient mixture was approximately 2.12% by mass with respect to the content of the raw ingredient mixture.

25 g of each granular pet food D1 was accommodated in the packaging material 3 illustrated in FIG. 1 and sealed therein together with the oxygen absorber 4, thereby obtaining pet food D1 which is a dry type pet food packaging.

[Table 1]

| Dry type pet food | | D1 |
|---|---|---|
| Raw ingredient mixture [parts by mass] | Cereals | 62.00 |
| | Proteins | 27.00 |
| | Inorganic salts | 0.72 |
| | Vitamins | 0.27 |
| | Fibers | 2.00 |
| | Preservatives | 0.20 |
| | Fats and oils (beef tallow) | 2.00 |
| External additives [parts by mass] | Fats and oils (beef tallow) | 4.30 |
| | Palatability enhancer | 1.60 |
| Total amount of raw ingredients [parts by mass] | | 100.09 |

(Production Example 2: semi-moist type pet food S1)

Raw ingredients listed in Table 2 were used. LILY 8 (product name, manufactured by Matsutani Chemical Industry Co., Ltd.) was used as modified starch H.

In the present example, the content of fats and oils in the raw ingredient mixture was approximately 3.30% by mass with respect to the content of the raw ingredient mixture.

Propylene glycol having a concentration of 100% by mass and a glycerin aqueous solution having a concentration of 85% by mass were used as a humectant. In Table 1, the concept of water serving as a solvent is included in additive water.

First, powder raw ingredients were mixed, liquid raw ingredients and additive water were added thereto, and the mixture was further mixed, thereby obtaining a raw ingredient mixture. The obtained raw ingredient mixture was put into an extruder and subjected to a heat treatment at 115°C $\pm$ 15°C for approximately 2 minutes while kneading, a starch component was pregelatinized, and the mixture was puffed simultaneously with being extruded and granulated in a granular shape in an outlet of the extruder. The kneaded material was extruded from a (circular) hole having a diameter of 5.3 mm in a columnar shape in the outlet of the extruder, the columnar material was cut using a cutter such that the thickness thereof was set to 6.0 mm, thereby obtaining a granulated material.

After the obtained granulated material was coated with an external additive without performing a drying process, and granular pet food S1 formed of semi-moist type puffed granules was obtained.

The water content and the water activity (Aw) of the obtained granular pet food S1 were measured using the above-described methods. The results are listed in Table 2.

25 g of each granular pet food S1 was accommodated in the packaging material 3 illustrated in FIG. 1 and sealed therein together with the oxygen absorber 4, thereby obtaining pet food S1 which is a semi-moisty type pet food packaging.

(Production Examples 3 to 5: semi-moist type pet foods S2 to S4)

Semi-moist type granular pet foods S2 to S4 were produced by the same procedures as in Production Example 2 except that the composition in Production Example 2 was changed.

The difference between the composition in Production Example 3 (S2) and the composition in Production Example 2 (S1) was that the content of fats and oils used as liquid raw ingredients was set to approximately 6.39% by mass with respect to the content of the raw ingredient mixture.

The difference between the composition in Production Example 4 (S3) and the composition in Production Example 2 (S1) was that a part of cereals was replaced with modified starch H.

The difference between the composition in Production Example 5 (S4) and the composition in Production Example 2 (S1) was that a part of cereals was replaced with modified starch H, the content of fats and oils used as liquid raw ingredients was increased to approximately 6.39% by mass with respect to the content of the raw ingredient mixture, and a flavoring agent was used as an external additive.

Similar to Production Example 2, the water content and the water activity (Aw) of each of the obtained granular pet foods S2 to S4 were measured. The results are listed in Table 2.

In each example, 25 g of each granular pet food was accommodated in the packaging material 3 illustrated in FIG. 1 and sealed therein together with the oxygen absorber 4 in the same manner as in Production Example 2, thereby obtaining pet foods S2 to S4 which are semi-moist type pet food packagings.

[Table 2]

| Semi-moist type pet food | | | S1 | S2 | S3 | S4 |
|---|---|---|---|---|---|---|
| Raw ingredient mixture [parts by mass] | Powder raw ingredients | Cereals | 34.00 | 34.00 | 29.00 | 29.00 |
| | | Modified starch H | 0.00 | 0.00 | 5.00 | 5.00 |
| | | Proteins | 19.00 | 19.00 | 19.00 | 19.00 |
| | | Inorganic salts | 3.70 | 3.70 | 3.70 | 3.70 |
| | | Vitamins | 0.16 | 0.16 | 0.16 | 0.16 |
| | | Emulsifier | 0.50 | 0.50 | 0.50 | 0.50 |
| | | Preservatives | 0.33 | 0.33 | 0.33 | 0.33 |
| | | Amino acid | 0.10 | 0.10 | 0.10 | 0.10 |
| | | Palatability enhancer | 0.80 | 0.80 | 0.80 | 0.80 |
| | | Saccharides | 5.20 | 5.20 | 5.20 | 5.20 |
| | | Organic acid | 0.12 | 0.12 | 0.12 | 0.12 |
| | Liquid raw ingredients | Liquid sugar | 15.00 | 12.00 | 15.00 | 12.00 |
| | | Humectants | 6.50 | 6.50 | 6.50 | 6.50 |
| | | Fats and oils | 3.20 | 6.20 | 3.20 | 6.20 |
| | | Emulsifier | 0.10 | 0.10 | 0.10 | 0.10 |
| | Additive water (including water as solvent) | | 8.25 | 8.25 | 8.25 | 8.25 |
| External additives [parts by mass] | | Fats and oils | 3.00 | 3.00 | 3.00 | 3.00 |
| | | Flavoring agent | 0.00 | 0.00 | 0.00 | 0.20 |
| | | Palatability enhancer | 2.50 | 2.50 | 2.50 | 2.50 |
| Total amount of raw ingredients [parts by mass] | | | 102.46 | 102.46 | 102.46 | 102.66 |
| Water content of granular pet food [% by mass] | | | 21.00 | 22.00 | 21.20 | 22.40 |
| Water activity (Aw) of granular pet food (Aw) | | | 0.639 | 0.664 | 0.640 | 0.678 |

<Test Examples 1 and 2: evaluation of palatability>

A change in palatability (preference) due to heating was examined using the pet food D1 produced in Production Example 1 according to the above-described method of evaluating palatability.

Pet food D1 at room temperature was set as pet food A and pet food D1 heated just before feeding was set to pet food B. The breed of the dogs served as food tasters was set to beagle, amount of one feeding was set to 250 g, and the number of dogs was set to 12 dogs.

The pet food was heated using a microwave oven in a state of being accommodated and sealed in a packaging material. The heating time was set by examining the time required for the surface temperature of pet food just before opening to reach a predetermined target temperature in advance (the same was applied to hereinafter).

Pet food D1 was heated to a temperature range of 40°C to 50°C (the target temperature was 45°C, hereinafter, also described as 40°C to 50°C) in Test Example 1 and pet food D1 was heated to higher than 50°C and equal to or lower than 60°C (the target temperature was 55°C, hereinafter, also described as 50°C to 60°C) in Test Example 2.

The results of evaluating palatability are listed in Table 3.

<Test Examples 3 to 5: evaluation of palatability>

A change in palatability (preference) due to heating was examined using the pet food S 1 produced in Production Example 2 according to the above-described method of evaluating palatability.

Pet food S1 at room temperature was set as pet food A and pet food S 1 heated just before feeding was set to pet food B. The breed of the dogs served as food tasters was set to beagle, amount of one feeding was set to 250 g, and the number of dogs was set to 12 dogs.

The heating temperature of pet food S1 was set to a range of 40°C to 50°C (the target temperature was 45°C) in Test Example 3, the heating temperature of pet food S1 was set to higher than 50°C and equal to or lower than 60°C (the target temperature was 55°C) in Test Example 4, and the heating temperature of pet food S1 was set to higher than 60°C and equal to or lower than 70°C (the target temperature was 65°C, hereinafter, also described as 60°C to 70°C) in Test Example 5.

The results of the evaluation of palatability are listed in Table 3.

<Test Example 6: evaluation of palatability>

A change in palatability (preference) due to a difference in heating temperature was examined using the pet food S 1 produced in Production Example 2 according to the above-described method of evaluating palatability.

Pet food S1 heated to a temperature range of 40°C to 50°C just before feeding was set as pet food A and pet food S1 heated to a temperature range of 50°C to 60°C just before feeding was set as pet food B. The breed of the dogs served as food tasters was set to beagle, amount of one feeding was set to 250 g, and the number of dogs was set to 12 dogs.

The results of evaluating palatability are listed in Table 3.

<Test Example 7: evaluation of palatability>

The palatability of pet food S4 produced in Production Example 5 at the time of heating was examined according to the above-described method of evaluating palatability.

Pet food S1 at room temperature was set as pet food A and pet food S4 heated to a temperature range of 40°C to 50°C just before feeding was set as pet food B. The breed of the dogs served as food tasters was set to beagle, amount of one feeding was set to 250 g, and the number of dogs was set to 24 dogs.

The results of evaluating palatability are listed in Table 3.

[Table 3]

| | Pet food A | | Pet food B | | Numerical value A:numerical value B |
|---|---|---|---|---|---|
| Test Example 1 | D1, room temperature | | D1 | 40-50°C | 41:59 |
| Test Example 2 | | | | 50-60°C | 46:54 |
| Test Example 3 | S1, room temperature | | S1 | 40-50°C | 43:57 |
| Test Example 4 | | | | 50-60°C | 43:57 |
| Test Example 5 | | | | 60-70°C | 44:56 |
| Test Example 6 | S1 | 40~50°C | S1 | 50-60°C | 54:46 |
| Test Example 7 | S1, room temperature | | S4 | 40-50°C | 43:57 |

As shown in the results in Table 3, in all cases of dry type pet food D1 and semi-moisty type pet food S1 and S4, it was understood that the palatability was improved by heating the pet food just before feeding compared to the conventional method of feeding dogs with pet food at room temperature.

Further, when Test Examples 1, 2, and 3 to 6 were compared to each other, it was understood that the palatability was highest when the heating temperature was in a range of 40°C to 50°C.

<Test Examples 11 to 16: evaluation of palatability>

The effect of a flavoring agent on the palatability of pet food for dogs was tested.

Specifically, semi-moist type pet food was produced in the same manner as in Production Example 2 except that the following flavoring agent was added and blended into the composition of the pet food S1 of Production Example 2 listed in Table 4.

According to the above-described method of evaluating palatability, pet food S 1 at room temperature was set as pet food A and pet food (room temperature) to which a flavoring agent was added was set as pet food B, and then the palatability thereof was evaluated. The dog breeds were set to Dachshund, Pomeranian, Toy Poodle, Yorkshire Terrier, Papillon, and the like, amount of one feeding was set to 125 g, and the number of dogs was set to 10 dogs. The results of evaluating the palatability are listed in Table 4.

Test Example 11: 0.2 parts by mass of minestrone-based flavoring agent a (approximately 0.21 parts by mass with respect to 100 parts by mass of raw ingredient mixture)
Test Example 12: 0.2 parts by mass of meat-based flavoring agent b
Test Example 13: 0.2 parts by mass of milk-based flavoring agent c
Test Example 14: 0.2 parts by mass of cream cheese-based flavoring agent d
Test Example 15: 0.1 parts by mass of milk-based flavoring agent e (approximately 0.1 parts by mass with respect to 100 parts by mass of raw ingredient mixture)
Test Example 16: 0.1 parts by mass of beef-based flavoring agent f

[Table 4]

| | Pet food A | Pet food B | | Numerical value A: numerical value B |
|---|---|---|---|---|
| Test Example 11 | S1, room temperature | S1 + flavoring agent, room temperature | Flavoring agent a | 50:50 |
| Test Example 12 | | | Flavoring agent b | 60:40 |
| Test Example 13 | | | Flavoring agent c | 66:34 |
| Test Example 14 | | | Flavoring agent d | 52:48 |
| Test Example 15 | | | Flavoring agent e | 51:49 |
| Test Example 16 | | | Flavoring agent f | 53:47 |

As shown in the results in Table 4, in a case where a flavoring agent is blended with semi-moist type pet food, the palatability is not changed or degraded in some cases depending on the type of the flavoring agent compared to cases where a flavoring agent is not blended. Therefore, it is considered that a flavoring agent does not contribute improvement of palatability of pet food for dogs.

<Test Examples 21 to 24: evaluation of hardness>

With the semi-moist type pet foods S 1 to S4 produced in Production Examples 2 to 5, the hardness of granular pet food at room temperature (surface temperature of 25°C) and the hardness of granular pet food immediately after the granular pet food was heated until the surface temperature reached 45°C were measured. Specifically, the breaking stress of granular pet food was measured according to the above-described compression test. The value of "an amount of change due to heating (unit:%)" was calculated using the following Formula (i). The results are listed in Table 5.

$$\text{Amount of change [\%] in breaking stress due to heating} = (P1 - P2)/P1 \times 100 \cdots$$

Formula (i)

P1: breaking stress [N] at room temperature (surface temperature of 25°C)
P2: breaking stress [N] measured immediately after the granular pet food was heated until the surface temperature reached 45°C

[Table 5]

| | Semi-moist type pet food | Breaking stress [N] | | Amount of change due to heating [%] |
|---|---|---|---|---|
| | | Room temperature | After heating | |
| Test Example 21 | S1 | 8.09 | 3.48 | 57 |
| Test Example 22 | S2 | 4.63 | 2.75 | 41 |
| Test Example 23 | S3 | 6.24 | 2.88 | 54 |
| Test Example 24 | S4 | 3.86 | 1.53 | 60 |

As shown in the results in Table 5, the hardness of the pet food S2, in which the amount of fats and oils contained in granular pet food was more increased than that in the pet food S1, at room temperature was degraded compared to the hardness of the pet food S 1 and the hardness after heating was also degraded. Therefore, it is understood that addition of fats and oils results in decrease of hardness.

The hardness of the pet food S3, to which modified starch H was further added in addition to the composition of pet food S1 having granular pet food which contained fats and oils, at room temperature was degraded compared to the hardness of the pet food S 1 and the hardness after heating was also degraded. Therefore, it is understood that addition of modified starch H results in degradation of hardness.

Further, when the pet food S4 to which modified starch H was further added in addition to the composition of pet food S2 was compared to the pet food S2 in which the amount of fats and oils contained in granular pet food was more increased than the pet food S1, the hardness of the pet food S4 was low particularly after heating and the amount of change in hardness due to heating was large.

From these results, it is recognized that the amount of change in hardness due to heating is increased by adding modified starch H together with fats and oils.

In regard to the amount of change in hardness particularly due to the heating, the change amounts of pet food S2 and pet food S3 were smaller than the change amount of pet food S 1 and the change amount of pet food S4 was larger than the change amount of pet food S 1.

From these results, it is recognized that the amount of change in hardness due to heating was reliably increased by performing both of increasing the amount of fats and oils and using the modified starch H compared to a case where either of increasing the amount of fats and oils and using the modified starch H was performed.

<Test Examples 31 and 32: evaluation of change in hardness with time>

With the semi-moisty type pet foods S 1 and S4 produced in Production Examples 2 and 5, each pet food was stored at room temperature for 1 month and the hardness of granular pet food before and after the storage was measured. Specifically, the breaking stress of granular pet food was measured according to the above-described compression test.

The measurement results and the values of "a temporal change rate (unit: %) to be calculated by the following Formula (ii) are listed in Table 6.

$$\text{Temporal change rate } [\%] = \text{breaking stress before storage/breaking stress after storage for one month} \times 100 \cdots \text{Formula (ii)}$$

[Table 6]

| | Semi-moist type pet food | Breaking stress [N] | | Temporal change rate [%] |
| --- | --- | --- | --- | --- |
| | | Room temperature before storage | Room temperature after storage for one month | |
| Test Example 31 | S1 | 8.09 | 10.86 | 134 |
| Test Example 32 | S4 | 3.86 | 4.21 | 109 |

From the results of Table 6, the temporal change rate of pet food S4 was significantly smaller than that of the pet food S1. In other words, in the pet food S4 containing a larger amount of fats and oils than that of the pet food S 1 and also containing modified starch H, an increase in breaking stress during storage was small and the softness was excellently maintained.

Industrial Applicability

According to the feeding method of the present invention, it is possible to improve the palatability of granular pet food. Further, the granular pet food of the present invention can be used for the method of feeding pets with pet food after being heated and the palatability can be improved by heating the pet food. Further, the pet food packaging of the present invention can be used for the method of feeding pets with pet food after being heated and the palatability can be improved by heating the pet food. Therefore, the present invention is extremely useful industrially.

Reference Signs List

1: pet food packaging
2: granular pet food
3: packaging material
4: oxygen absorber

**Claims**

1. A feeding method comprising:

   heating granular pet food to a temperature range of 30°C to 70°C; and
   feeding the granular pet food to a pet.

2. The feeding method according to claim 1,
   wherein an amount of the granular pet food to be used in one occasion is sealed in a packaging material having a heat resistance and gas barrier properties, and the packaging material is heated without being opened.

3. The feeding method according to claim 2,
   wherein the packaging material has microwave oven suitability and is heated using a microwave oven.

4. Granular pet food which is heated to a temperature range of 30°C to 70°C just before feeding.

5. The granular pet food according to claim 4 containing, inside of granules:

   modified starch which is obtained by esterifying starch with propylene oxide; and
   fats and oils.

**6.** The granular pet food according to claim 4 or 5,
wherein a water content is in a range of 15% to 30% by mass, and
an amount of change (unit: %) in breaking stress due to heating, which is calculated using the following Formula (i), is 40% or greater:

$$\text{Amount of change [\%] in breaking stress due to heating} = (P1 - P2)/P1 \times 100 \cdots$$

Formula (i)

P1: breaking stress [N] at room temperature (surface temperature of 25°C)
P2: breaking stress [N] measured immediately after the granular pet food is heated until the surface temperature reaches 45°C.

**7.** The granular pet food according to any one of claims 4 to 6, wherein the granular pet food includes a coating layer containing a flavoring agent.

**8.** A pet food packaging,
wherein the granular pet food according to any one of claims 4 to 7 is accommodated in a packaging material, and
the packaging material has an indication associated with heating just before feeding.

**9.** The pet food packaging according to claim 8,
wherein the packaging material has heat resistance and gas barrier properties,
an amount of the granular pet food to be used in one occasion is sealed in the packaging material, and
the packaging material is configured to be capable of being heated without being opened.

**10.** The pet food packaging according to claim 9,
wherein the packaging material has microwave oven suitability.

**11.** The pet food packaging according to claim 10,
wherein the packaging material is provided with a rupture preventing mechanism.

**12.** The pet food packaging according to claim 10 or 11,
wherein an oxygen absorber having a microwave oven suitability is sealed in the packaging material.

**13.** The pet food packaging according to any one of claims 9 to 12,
wherein gas in the packaging material is replaced with nitrogen gas.

FIG. 1

## INTERNATIONAL SEARCH REPORT

| | International application No. |
|---|---|
| | PCT/JP2014/083213 |

A. CLASSIFICATION OF SUBJECT MATTER
*A23K1/18*(2006.01)i, *A23K1/00*(2006.01)i, *B65D81/34*(2006.01)i

According to International Patent Classification (IPC) or to both national classification and IPC

B. FIELDS SEARCHED

Minimum documentation searched (classification system followed by classification symbols)
A23K1/00-3/04, B65D81/34

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | Pet no Kiso Chishiki Tokubetsuhen [Shikosei ni Tsuite 3], Koenji Animal Clinic, [online], 10 July 2014 (10.07.2014) (archive date), [retrieval date 08 January 2015 (08.01.2015)], Internet <https://web.archive.org/web/20140710015621/http://www.koenji-ac.com/kiso/tokubetu07.html> | 1,4,8<br>2,3,9-13 |
| Y | JP 2003-144059 A  (Mars, Inc.),<br>20 May 2003 (20.05.2003),<br>paragraphs [0010], [0014], [0024], [0032]<br>(Family: none) | 2,3,9-13 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 March 2015 (10.03.15) | 24 March 2015 (24.03.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (July 2009)

**INTERNATIONAL SEARCH REPORT**

| International application No. |
|---|
| PCT/JP2014/083213 |

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 107534/1989(Laid-open No. 78784/1991) (Yugen Kaisha Isomakizushi no Uoku), 09 August 1991 (09.08.1991), page 5, lines 6 to 20 (Family: none) | 11 |
| Y | JP 3002228 U (Mitsui Petrochemical Industries, Ltd.), 20 September 1994 (20.09.1994), paragraphs [0006] to [0007] (Family: none) | 11 |
| Y | JP 2004-306984 A (Belle Kasugai Co., Ltd.), 04 November 2004 (04.11.2004), paragraph [0006] (Family: none) | 11 |
| Y | WO 2007/069735 A1 (Mitsui Mining & Smelting Co., Ltd.), 21 June 2007 (21.06.2007), paragraphs [0051] to [0052] & JP 2007-185653 A & JP 2007-222868 A & JP 2008-173636 A & US 2009/0126573 A1 & EP 1974808 A1 & CN 101330971 A | 12 |
| Y | JP 2005-103537 A (National Institute of Advanced Industrial Science and Technology), 21 April 2005 (21.04.2005), paragraph [0019] & US 2007/0037722 A1 & EP 1666139 A1 & WO 2005/025739 A1 & KR 10-2006-0087542 A & CN 1845787 A | 12 |
| Y | JP 2011-195185 A (Powdertech Co., Ltd.), 06 October 2011 (06.10.2011), paragraph [0020] (Family: none) | 12 |
| Y | JP 2-174660 A (Fujiya Co., Ltd.), 06 July 1990 (06.07.1990), page 2, lower left column, lines 10 to 12 (Family: none) | 13 |
| Y | JP 8-332037 A (Takano Corp.), 17 December 1996 (17.12.1996), paragraph [0022] (Family: none) | 13 |

Form PCT/ISA/210 (continuation of second sheet) (July 2009)

## INTERNATIONAL SEARCH REPORT

International application No.

PCT/JP2014/083213

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

```
     The inventions according to claims 1 to 3 and the inventions according
to claims 4 to 13 have a common technical feature "heating a granular pet
food to 30-70°C inclusive".
     However, the above-said technical feature cannot be considered to be a
special technical feature, since the technical feature does not make a
contribution over the prior art in the light of the contents disclosed in
the document 1 (Pet no Kiso Chishiki Tokubetsuhen [Shikosei ni Tsuite 3],
Koenji Animal Clinic, [online], 10 July 2014 (10.07.2014), [retrieval date
08 January 2015 (08.01.2015)],
(Continued to extra sheet)
```

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   1-4 and 8-13

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2014/083213

Continuation of Box No.III of continuation of first sheet(2)

Internet
<https://web.archive.org/web/20140710015621/http://www.koenji-ac.com/kiso/tokubetu07.html>).

Further, there is no other same or corresponding special technical feature between these inventions.

Accordingly, claims are classified into four inventions each of which has a special technical feature indicated below.

(Invention 1) claims 1-4 and 8-13

A feeding method characterized by comprising heating a granular pet food, said granular pet food being enclosed in a single dose package that is formed of a packaging material having heat resistance and gas barrier properties, to 30-70°C inclusive without opening the package before giving to a pet.

The search, which has been carried out with respect to the inventions of claims 2 and 3 having the above-said special technical feature revealed that claims 4 and 8-13 are relevant to inventions on which it is substantially possible to carry out a search without an additional prior-art search and judgment, and therefore, said claims 4 and 8-13 have been classified into Invention 1.

Meanwhile, the invention of claim 1, of which novelty is denied by the document 1, has been also classified into Invention 1.

(Invention 2) claim 5

A granular pet food that is to be heated to 30-70°C inclusive immediately before feeding, said granular pet food containing processed starch that is obtained by etherifying starch with propylene oxide and a fat or oil within grains.

Claim 5 is not relevant to an invention which involves all of the matters to define the invention in claim 1 and which has a same category.

Further, as a result of the search which has been carried out with respect to claims classified into Invention 1, claim 5 is not relevant to an invention on which it is substantially possible to carry out a search without an additional prior-art search and judgment, and there is no other reason for that it can be considered that it is efficient to carry out a search on claim 5 together with claims 1-4 and 8-13, and consequently, it is impossible to classify claim 5 into Invention 1.

(Invention 3) claim 6

A granular pet food that is to be heated to 30-70°C immediately before feeding, wherein the water content is 15-30 mass%, and a variation (expressed in %) in rupture stress caused by heating that is calculated in accordance with formula (i) is 40% or greater.

Variation [%] in rupture stress caused by heating=$(P1-P2)/P1\times100$ ··· formula (i)

P1: rupture stress [N] at room temperature (surface temperature 25°C)

P2: rupture stress [N] immediately after heating to give a surface temperature of 45°C

Claim 5 is not relevant to an invention which involves all of the matters to define the invention in claim 1 and which has a same category.

(Continued to next extra sheet)

Form PCT/ISA/210 (extra sheet) (July 2009)

**INTERNATIONAL SEARCH REPORT**

International application No.

PCT/JP2014/083213

Further, as a result of the search which has been carried out with respect to claims classified into Invention 1, claim 5 is not relevant to an invention on which it is substantially possible to carry out a search without an additional prior-art search and judgment, and there is no other reason for that it can be considered that it is efficient to carry out a search on said claim together with claims 1-4 and 8-13, and consequently, it is impossible to classify claim 6 into Invention 1.

(Invention 4) claim 7

A granular pet food that is to be heated to 30-70°C immediately before feeding, said granular pet food comprising a fragrance-containing coating layer.

Claim 7 is not relevant to an invention which involves all of the matters to define the invention in claim 1 and which has a same category.

Further, as a result of the search which has been carried out with respect to claims classified into Invention 1, claim 7 is not relevant to an invention on which it is substantially possible to carry out a search without an additional prior-art search and judgment, and there is no other reason for that it can be considered that it is efficient to carry out a search on claim 7 together with claims 1-4 and 8-13, and consequently, it is impossible to classify claim 7 into Invention 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014233962 A

- JP 2003144059 A

**Non-patent literature cited in the description**

- Small Animal Clinical Nutrition. Mark Morris Associates, 2000, 157-190